Europäisches Patentamt

European Patent Office

Office européen des brevets

(11) Veröffentlichungsnummer: **0 097 946**
**B1**

(12) **EUROPÄISCHE PATENTSCHRIFT**

(45) Veröffentlichungstag der Patentschrift:
**11.03.87**

(21) Anmeldenummer: **83106251.8**

(22) Anmeldetag: **27.06.83**

(51) Int. Cl.⁴: **H 01 G 4/32**

(54) **Stirnkontaktierter elektrischer Wickelkondensator und Verfahren zu seiner Herstellung.**

(30) Priorität: **29.06.82 DE 3224194**

(43) Veröffentlichungstag der Anmeldung:
**11.01.84 Patentblatt 84/2**

(45) Bekanntmachung des Hinweises auf die Patenterteilung:
**11.03.87 Patentblatt 87/11**

(84) Benannte Vertragsstaaten:
**DE FR GB IT**

(56) Entgegenhaltungen:
**DE - A - 2 210 711**
**DE - A - 2 726 324**
**DE - B - 2 416 566**
**US - A - 3 891 901**

(73) Patentinhaber: **Siemens Aktiengesellschaft Berlin und München, Wittelsbacherplatz 2, D-8000 München 2 (DE)**

(72) Erfinder: **Vetter, Harald, Dipl.-Ing., Weinberg 7, D-8400 Regensburg (DE)**

## Beschreibung

Die Erfindung betrifft einen stirnkontaktieren elektrischen Wickelkondensator gemäss dem Oberbegriff des Patentanspruchs 1 sowie ein Verfahren zu seiner Herstellung.

Die Kontaktierung derartiger Vollkunststoff-Wickel erfolgt durch das bekannte Schoopverfahren, bei dem mittels Flammspritzens beispielsweise Aluminium-Weissmetall bzw. Zink auf die Stirnseiten des Wickels aufgebracht werden. Um den erforderlichen elektrischen Kontakt zwischen der Stirnmetallschicht und den regenerierfähig dünnen Elektroden zu gewährleisten, ist es erforderlich, die einzelnen Kunststoffolien mit einem Versatz von beispielsweise 1 mm zu verwickeln.

Im Zusammenhang mit dem geschilderten Wickelversatz ist die Formstabilität der verwickelten Kunststoffolien von Interesse. Diese Formstabilität ist u.a. eine Funktion des Krümmungsradius, d.h. bei einem Wickelkondensator des Wickelradius. Mit zunehmendem Wickeldurchmesser weist die Folie eine geringere Formstabilität auf, wodurch sie bei konstantem Folienzug immer stärker verformt wird. Dies hat zur Folge, dass sich die Folie in den Randbereichen mit dem Wickelversatz einschnürt und somit zwangsläufig auf die vorhergehende Lage abstützt.

Dieser Effekt ist prinzipiell bei allen Wickelkondensatoren anzutreffen und lässt sich mit ausreichender Genauigkeit berechnen, wenn man ein Folienelement des Wickelkondensators als gekrümmten Schalenstreifen betrachtet. Die Formstabilität und damit die Durchwölbung f eines Materials ist dem Elastizitätsmodul E proportional. Vergleicht man die Formstabilität von beispielsweise Papier P mit der von Polypropylen PP bei sonst konstanten Parametern, so gilt:

$$f_P/f_{PP} \sim E_{PP}/E_P.$$

Bei Raumtemperatur beträgt $f_P/f_{PP}$ ca. ¼, so dass bei einem Papier-Wickelkondensator der oben angeführte Einschnüreffekt nicht auftritt.

In diesem Zusammenhand ist auch noch die thermische Belastung der Folienrandzonen beim Schoopvorgang nicht vernachlässigbar. Mit zunehmender Temperatur nimmt der Elastizitätsmodul von Kunststoffolien stark ab, wogegen sich der Elastizitätsmodul von Papier im Bereich der Schooptemperaturen kaum ändert. Das Verhältnis $f_P/f_{PP}$ wird deshalb mit steigenden Temperaturen immer ungünstiger für Polyprophylen, d.h. die Verformung nimmt noch weiter zu.

Die geschilderte Einschnürung der Folienrandzone erzeugt eine starke mechanische Dehnung in Folienquerrichtung mit der Gefahr, den auf den Folien angeordneten Metallschichten-Belag zusätzlich zur Schoopbelastung zu schädigen.

Aus der DE-A-2 726 324 ist ein stirnkontaktierter elektrischer Wickelkondensator bekannt, dessen Dielektrikum aus mit einem Versatz aufgewickelten Kunststoffolien besteht. Die Kunststoffolien besitzen als Elektroden dienende regenerierfähig dünne Metallschichten mit einem metallfreien Freirand. Die metallisierten, überstehenden Ränder der Folien sind mit einem Wellenschnitt versehen. Hierdurch können die vorstehend geschilderten Einschnüreffekte verstärkt auftreten.

Aus der US-A-3 891 901 sind elektrische Wickelkondensatoren bekannt, die eine Stirnkontaktierung durch zwei Metallschichten aufweisen. Massnahmen, durch die die genannten Einschnüreffekte beseitigt werden, sind in dieser Druckschrift nicht angeführt.

Aufgabe der Erfindung ist es, einen Kondensator der eingangs genannten Art anzugeben, bei dem die geschilderten Einschnüreffekte in den Folienrandzonen nicht auftreten, und der trotzdem mittels des Schoopverfahrens gut kontaktierbar ist.

Diese Aufgabe wird mit den kennzeichneten Merkmalen des Patentanspruches 1 gelöst.

Vorteilhafte Ausgestaltungen des Gegenstandes der Erfindung sind in den Unteransprüchen angeführt.

Die Vorteile der Erfindung werden anhand der folgenden Ausführungsbeispiele näher erläutert.

In der dazugehörenden Zeichnung zeigen

Fig. 1 ein Schnittbild eines Kondensatoraufbaus ohne Stützfolie,

Fig. 2 ein Schnittbild eines Kondensatoraufbaus mit Stützfolie,

Fig. 3 eine Ansicht der Stützfolie und

Fig. 4 einen vergrösserten Ausschnitt eines Randbereiches nach Fig. 2.

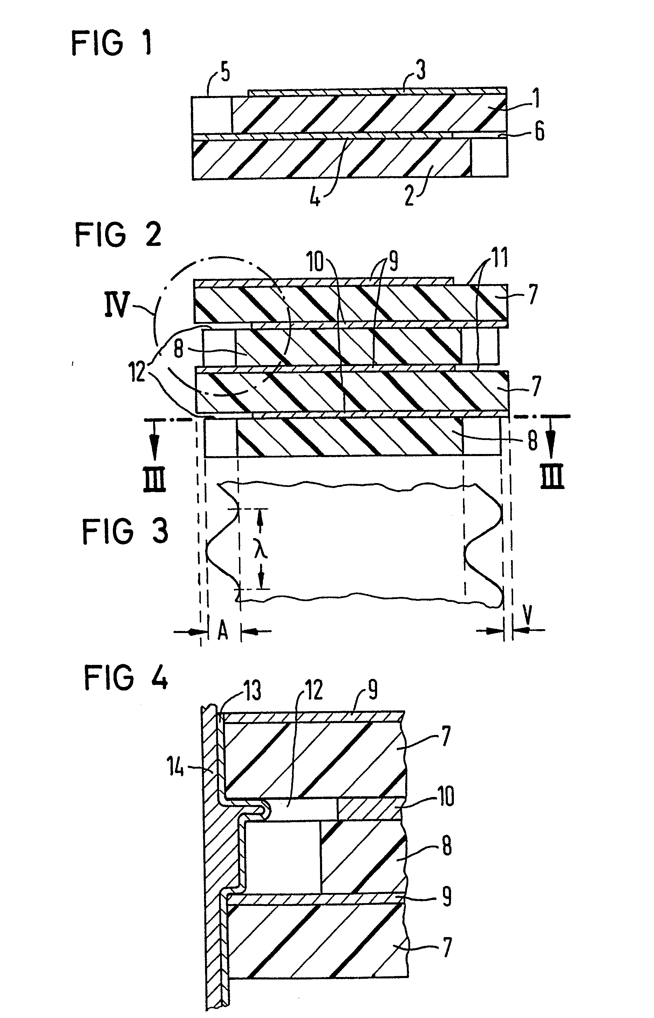

In Fig. 1 ist ein Kondensatoraufbau dargestellt, bei dem zwei Kunststoffolien 1, 2 miteinander verwickelt sind. Auf jeder der Kunststoffolien 1, 2, die beispielsweise aus Polypropylen oder Polycarbonat bestehen, ist eine regenerierfähige dünne Metallschicht 3 bzw. 4, beispielsweise aus Aluminium angeordnet. Ferner befinden sich an unterschiedlichen Längsseiten der Folien 1 bzw. 2 metallfreie Freirandzonen 5 bzw. 6. Die Ränder der Kunststofffolie 1 bzw. 2 sind im Bereich der Freirandzonen 5 bzw. 6 mit einem Wellen- oder Stufenschnitt der Amplitude A und der Wellenlänge λ versehen. Die Folien 1 und 2 sind mit einem Versatz von 0 bis 0,2 mm miteinander verwickelt.

Durch das Anbringen des erfindungsgemässen Wellen- bzw. Stufenschnittes im Bereich der Freirandzonen ergibt sich eine wesentliche Steigerung der Formstabilität des Wickels, ohne dass eine Verschlechterung der Kontaktierung daraus resultiert.

Betrachtet man das bereits beschriebene Folienelement im gefährdeten Randbereich des Wickels und verringert die Breite bis die Formstabilität infolge der Krümmung vernachlässigt werden kann, lässt sich die Durchbiegung unter gleichmässig verteilter Streckenlast leicht bestimmen. Ein abmessungsgleiches Folienelement, durch die Kunststoffolie mit Wellenschnitt partiell abgestützt, kann unter gleichen Lastbedingungen als einseitig eingespanntes und beidseitig unterstütztes Schalenelement behandelt werden. Damit er-

gibt sich näherungsweise folgendes Steifigkeits-verhältnis:

$$w \sim \tfrac{1}{60}.\, f.\, l,$$

mit f = Durchbiegung bzw. Durchwölbung des Biegeträgers, w = Durchbiegung des Schalenelements und 1 = Einspannlänge, die der Amplitude A des Wellenschnitts entspricht.

Bei den vorliegenden Massverhältnissen mit f ~ 1,4 mm l ~ 1 mm ergibt sich daraus eine Versteifung der Folienrandzone um etwa den Faktor 40.

In der Fig. 2 ist ein Wickelaufbau dargestellt, bei dem die regenerierfähig dünnen Metallschichten 9 bzw. 10 auf der Ober- bzw. Unterseite einer Kunststoffolie 7 angeordnet sind. Die Kunststoffolie 7 ist mit einer Kunststoff-Stützfolie 8 verwickelt, die keine Metallschichten besitzt. Im Bereich der Freirandzonen 11 bzw. 12 der Kunststoffolie 7 ist die Stützfolie 8 an beiden Rändern mit einem Wellen- bzw. Stufenschnitt versehen. Die Folien 7 bzw. 8 sind bei dem in der Fig. 2 dargestellten Ausführungsbeispiel mit einem Versatz v verwikkelt, der maximal 0,2 mm beträgt.

In der Figur 3 ist eine Ansicht der Stützfolie 8 dargestellt. Dort ist zu erkennen, dass in den Randbereichen der Stützfolie ein Wellenschnitt der Amplitude A und der Wellenlänge λ angeordnet ist. Die Amplitude A ist dabei ca. 0,5 bis ca. 2 mm gross und vorzugsweise kleiner als die Freirandbereiche. Die Wellenlänge λ beträgt beispielsweise ca. 1 bis ca. 5 mm.

Die Fig. 4 zeigt einen vergrösserten Ausschnitt des Randbereiches eines in der Fig. 2 dargestellten Kondensatoraufbaus. Die Stirnseiten des aus der Kunststoffolie 7 und der -Stützfolie 8 bestehenden Wickels sind dabei mit einer ein- oder mehrschichtigen durch Bestäubung (sputtern) hergestellten Schicht 13 vorbekeimt. Auf dieser Schicht 13 ist die Schoopschicht 14 angeordnet. Mit diesem Aufbau wird eine noch sicherere Kontaktierung der Metallschichten 9 bzw. 10 gewährleistet, da beim Schoopverfahren die Kontaktierung nur tröpfchenweise (punktuell) erfolgt, während man mit der Kathodenzerstäubung (Sputtern) eine flächige Kontaktierung erreicht.

Zusätzlich besteht die Möglichkeit, durch vorhergehendes Sputterätzen (Rücksputtern), bzw. durch eine Ionenstrahl- oder Plasmaätzung eine auf den Metallschichten 9 bzw. 10 vorhandene Oxidschicht (Dicke der Luftoxidschicht ca. 4 nm) zu beseitigen. Anschliessend daran kann ein oxidfreier Kontaktbelag aufgebracht werden.

## Patentansprüche

1. Stirnkontaktierter elektrischer Wickelkondensator, dessen Dielektrikum aus mit einem Versatz v aufgewickelten Kunststoffolien (1, 2; 7, 8) besteht, bei dem auf zumindest einer der Kunststoffolien als Elektroden dienende regenerierfähig dünne Metallschichten (3, 4; 9, 10) mit einem metallfreien Freirand angeordnet sind und bei dem die Ränder der Kunststoffolien zumindest einseitig mit einem Wellen- oder Stufenschnitt der Amplitude A und der Wellenlänge λ versehen sind, dadurch gekennzeichnet, dass der Wellen- oder Stufenschnitt in den metallfreien Bereichen der Kunststoffolien (1, 2; 7, 8) angeordnet ist, und dass die Grössen der Amplitude A ca. 0,5 bis ca. 2 mm, der Wellenlänge λ ca. 1 bis ca. 5 mm und des Versatzes v 0 bis 0,2 mm betragen.

2. Wickelkondensator nach Anspruch 1, dadurch gekennzeichnet, dass jede der beiden Elektroden (3, 4) auf jeweils einer Kunststoffolie (1, 2) angeordnet sind und dass die beiden Kunststoffolien (1, 2) derart miteinander verwickelt sind, dass sich die Freiränder (5, 6) auf unterschiedlichen Wickelseiten befinden.

3. Wickelkondensator nach Anspruch 1, dadurch gekennzeichnet, dass die beiden Elektroden (9, 10) auf einer Kunststoffolie (7) angeordnet sind, dass die Freiränder (11, 12) auf unterschiedlichen Randbereichen der Folie (7) angeordnet sind, und dass die Kunststoffolie (7) mit einer nicht metallbeschichteten Kunststoff-Stützfolie (8) verwickelt ist.

4. Wickelkondensator nach einem der vorhergehenden Ansprüche, dadurch gekennzeichnet, dass die Kunststoffolien (1, 2; 7) bzw. -Stützfolien (8) aus Polypropylen oder Polycarbonat bestehen.

5. Wickelkondensator nach Anspruch 3, dadurch gekennzeichnet, dass die Kunststoffolie (7) und Stützfolie (8) aus demselben Material bestehen.

6. Verfahren zum Herstellen eines Wickelkondensators nach einem der vorhergehenden Ansprüche, dadurch gekennzeichnet, dass die Stirnseiten des Wickels vor dem Anbringen der Stirnkontaktschichten (14) mittels Flammspritzens (beschoopen) durch eine ein- oder mehrschichtige Bestäubung (13) vorbekeimt werden.

7. Verfahren nach Anspruch 6, dadurch gekennzeichnet, dass vor der Vorbekeimung eine auf den Metallschichten (3, 4; 9, 10) im Bereich der Stirnseiten angeordnete Oxidschicht durch Sputtern (Rücksputtern), Ionenstrahl- oder Plasmaätzen entfernt wird.

## Claims

1. An end-contacted, wound electrical capacitor, the dielectric of which consists of synthetic resin foils (1, 2; 7, 8) which are wound with a stagger v, wherein regenerably thin metal layers (3, 4; 9, 10) which serve as electrodes are arranged on at least one of the synthetic resin foils to leave a metal-free edge zone, and wherein the edges of the synthetic resin foils are provided at least at one end, with a wave-shaped or stepped profile having an amplitude A and a wave length λ, characterised in that the wave-shaped or stepped provile is provided in the metal-free zones of the synthetic resin foils (1, 2; 7, 8); and that the values of the amplitude A are about 0.5 to about 2 mm, the wave length λ about 1 to about 5 mm, and of the stagger v 0 to 0.2 mm.

2. A wound capacitor as claimed in Claim 1, characterised in that each of the two electrodes (3, 4) is arranged on a respective synthetic resin foil (1, 2); and that the two synthetic resin foils (1, 2) are wound with one another in such manner that the free edges (5, 6) are located on different faces of the winding.

3. A wound capacitor as claimed in Claim 1, characterised in that the two electrodes (9, 10) are arranged on one synthetic resin foil (7); that the free edges (11, 12) are arranged at different edge zones of the foil (7); and that the synthetic resin foil (7) is wound with a non-metal-coated synthetic resin support foil (8).

4. A wound capacitor as claimed in one of the preceding Claims, characterised in that the synthetic resin foils (1, 2; 7) and support foils (8) consist of polypropylene or polycarbonate.

5. A wound capacitor as claimed in Claim 3, characterised in that the synthetic resin foil (7) and the support foil (8) are made of the same material.

6. A method of producing a wound capacitor as claimed in one of the preceding Claims, characterised in that prior to the application of the end contact layers (14) by flame spraying (the Schoop process), the end faces of the winding are pre-seeded by a single or multi-layer atomization (13).

7. A method as claimed in Claim 6, characterised in that prior to the pre-seeding, an oxide layer present in the metal layers (3, 4; 9, 10) in the region of the end faces is removed by sputtering (sputtering-off), ion-beam etching, or plasma etching.

**Revendications**

1. Condensateur électrique bobiné à contacts frontaux, dont le diélectrique est constitué par des feuilles de matière plastique (1, 2; 7, 8) enroulées avec un décalage (v), dans lequel sont déposées, sur au moins l'une des feuilles plastiques et avec un bord dépourvu de métal, des couches métalliques minces (3, 4; 9, 10) capables de régénération, et dans lequel les bords des feuilles plastiques sont pourvues, au moins sur un côté, d'une découpe ondulée ou en palier d'amplitude (A) et de longueur d'ondulation (λ), caractérisé par le fait que la découpe ondulée ou en palier est agencée dans les zones des feuilles plastiques (1, 2; 7, 8) dépourvues de métal et que la valeur de l'amplitude (A) est d'environ 0,5 à environ 2 mm, celle de la longueur des ondulations (λ) est d'environ 1 à environ 5 mm et celle du décalage (v) est de 0 à 0,2 mm.

2. Condensateur bobiné selon la revendication 1, caractérisé par le fait que chacune des électrodes (3, 4) est disposée sur une feuille plastique (1, 2), et que les deux feuilles plastiques (1, 2) sont bobinées de telle façon que les bords libres (5, 6) se situent sur des côtés différents de la bobine.

3. Condensateur bobiné selon la revendication 1, caractérisé par le fait que les deux électrodes (9, 10) sont disposés sur une même feuille de matière plastique, que les bords libres (11, 12) sont disposés sur des zones marginales différentes de la feuille (7), et que la feuille de matière plastique (7) est enroulée avec une feuille de matière plastique d'appui (8) qui n'est pas pourvue d'un revêtement métallique.

4. Condensateur bobiné selon l'une des revendications précédentes, caractérisé par le fait que les feuilles de matière plastique (1, 2; 7) et les feuilles de matière plastique d'appui (8) sont constituées avec du polypropilène ou du polycarbonate.

5. Condensateur bobiné selon la revendication 3, caractérisé par le fait que la feuille de matière plastique (7) et la feuille d'appui (8) sont constituées par un même matériau.

6. Procédé pour la fabrication d'un condensateur bobiné selon l'une des revendications précédentes, caractérisé par le fait qu'avant le dépôt des couches (14) pour les contacts frontaux, les côtés frontaux de la bobine sont soumis à une pré-germination par une pulvérisation à couche unique ou à couches multiples (13), à l'aide d'un schoopage.

7. Procédé selon la revendication 6, caractérisé par le fait qu'avant la pré-germination, on supprime par pulvérisation cathodique, par attaque aux faisceaux d'ions ou au plasma, une couche d'oxyde disposée sur les couches métalliques (3, 4; 9, 10), dans la zone des côtés frontaux.

FIG 1

FIG 2

FIG 3

FIG 4